(19) Europäisches Patentamt
European Patent Office
Office européen des brevets

(11) **EP 4 629 146 A1**

(12) **EUROPEAN PATENT APPLICATION**
published in accordance with Art. 153(4) EPC

(43) Date of publication:
**08.10.2025  Bulletin 2025/41**

(21) Application number: **23897813.4**

(22) Date of filing: **29.11.2023**

(51) International Patent Classification (IPC):
***G06Q 10/06*** (2023.01)

(52) Cooperative Patent Classification (CPC):
**G06Q 10/06; G06Q 10/0631**

(86) International application number:
**PCT/JP2023/042708**

(87) International publication number:
**WO 2024/117166 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2022  CN 202211518575
26.09.2023  CN 202311252914**

(71) Applicant: **Daikin Industries, Ltd.
Osaka-shi, Osaka 530-0001 (JP)**

(72) Inventors:
• **PAN, Si
  Osaka-shi, Osaka 530-0001 (JP)**
• **LI, Mengsha
  Osaka-shi, Osaka 530-0001 (JP)**
• **LIAO, Huan
  Osaka-Shi, Osaka 530-0001 (JP)**
• **JIANG, Lan
  Osaka-Shi, Osaka 530-0001 (JP)**

(74) Representative: **Conti, Marco
Bugnion S.p.A.
Via di Corticella, 87
40128 Bologna (IT)**

(54) **WORKER DETERMINATION METHOD AND DEVICE, AND WORKER DISTRIBUTION SYSTEM**

(57)     To provide a worker determination method and device, and a worker distribution system. Since a worker for the work item is determined by comprehensively considering the elements including the work item information, and the attribute information and the physiological data of candidate workers, it has been possible to determine a worker who has a high degree of matching with the work item and whose current situation is suited to execute the work item, thereby balancing the work effect and the health condition of the worker. This has improved the work quality and user satisfaction, and has secured the safety of the worker.

FIG. 1

EP 4 629 146 A1

## Description

### TECHNICAL FIELD

The present invention relates to the field of machine maintenance and, more specifically, to a method for determining a worker, a worker determination device, and a worker distribution system.

### BACKGROUND ART

With the development of science and technology and the improvement of living standards, various electronic or electric devices have been widely used in various fields and phases such as life, business, and production. Accordingly, the service including maintenance, repair, and replacement of such devices has also been an important industry and is in the course of development.

Nowadays, workers generally visit houses to perform work related to maintenance, repair, replacement, and the like of devices in most cases. In addition, with respect to the distribution of workers, it is common that a local service organization randomly arranges workers belonging to the organization on the basis of a service area, a service time, and the like, and then the workers visit houses to perform service.

It should be noted that the foregoing description of the technical background is merely provided to clearly and completely describe the technical solutions of the present invention and to facilitate the understanding of persons skilled in the art. Only with the description of these solutions in the background art of the present invention, the above-described technical solutions are not considered to be known to persons skilled in the art.

Summary of Invention

Technical Problem

However, in the above-described conventional method, a local organization randomly arranges workers who visit houses and perform service. In this way, the matching degree between a worker and an item of the after-sales service to be performed, for example, a specific work item of maintenance and repair is unknown, and the effect of performing the maintenance and repair is also unknown. Therefore, the maintenance and repair item may not be completed properly. This may deteriorate the completion quality of maintenance and repair and lower the user satisfaction.

In addition, the conventional method does not focus on the physical and mental condition of a worker. The poor physical or mental condition may affect the completion of maintenance and repair item by the worker and the communication with a user, which may further deteriorate the completion quality of work and lower the user satisfaction. Further, for some work items, for example, dangerous work items such as work at a high place, the poor physical or mental conditions may lead to the occurrence of danger.

In order to solve at least one of the above-described problems, examples of the present invention provide a method for determining a worker, a worker determination device, and a worker distribution system.

Solution to Problem

A first aspect of an example of the present invention provides a method for determining a worker, the method including: acquiring work item information; acquiring attribute information and physiological data of a candidate worker; and determining a worker for a work item on the basis of the work item information and the attribute information and the physiological data of the candidate worker.

A second aspect of an example of the present invention provides a method for distributing a worker, the method including: submitting, by a user, a work order through a terminal device; acquiring, by a server, work item information and attribute information and physiological data of a candidate worker on the basis of the work order; determining, by the server, a worker for a work item on the basis of the work item information and the attribute information and the physiological data of the candidate worker; transmitting, by the server, related information of the work order to a terminal device of the worker; and completing distribution of the worker after the server receives a confirmation message from the worker.

A third aspect of an example of the present invention provides a worker determination device, including: a first acquisition unit configured to acquire work item information; a second acquisition unit configured to acquire attribute information and physiological data of a candidate worker; a determination unit configured to determine a worker for a work item on the basis of the work item information and the attribute information and the physiological data of the candidate worker.

A fourth aspect of an example of the present invention provides a worker distribution system, including: a user terminal with which a user submits a work order; a server configured to acquire work item information and attribute information and physiological data of a candidate worker on the basis of the work order, and determine a worker for a work item on the basis of the work item information and the attribute information and the physiological data of the candidate worker; and a worker terminal with which a confirmation message is transmitted to the server after receiving related information of the work order from the server.

As one of the beneficial effects of the present invention, since a worker for the work item is determined by comprehensively considering the elements including the work item information, and the attribute information and the physiological data of candidate workers, it has been possible to determine a worker who has a high degree of matching with the work item and whose current situation is suited to execute the work item so as to balance the work effect and the health condition of the worker, thereby improving the work quality and user satisfaction and securing the safety of the worker.

Characteristic information described and illustrated in one embodiment may be used in one or more other embodiments in the same or similar aspects, and may be combined with characteristic information in other embodiments or substitute for characteristic information in other embodiments.

It should be emphasized that the term "include/including" indicates, when used in this specification, the presence of characteristic information, an entire component, a step, or a component, while it does not exclude the presence or addition of one or more pieces of other characteristic information, entire components, steps, or components.

The present invention can be better understood from many aspects with reference to the following drawings. The components in the drawings are not proportional, but are merely illustrative of the principles of the present invention. To illustrate and describe certain parts of the present invention, the corresponding parts in the drawings may be enlarged or reduced in size. Elements and feature information shown in one drawing or one kind of embodiment of the present invention may be combined with elements and feature information shown in one or more other drawings or embodiments. Moreover, similar reference numerals in the drawings may indicate corresponding components in the several drawings, and indicate corresponding components used in one or more embodiments.

Each of the drawings is as follows.

Brief Description of Drawings

Fig. 1 is a flowchart of a worker determination method according to Example 1 of the present invention.
Fig. 2 is a flowchart of a method for implementing Step 103 according to Example 1 of the present invention.
Fig. 3 is a flowchart of a method for implementing Step 201 according to Example 1 of the present invention.
Fig. 4 is a schematic view of a network structure for implementing Step 201 according to Example 1 of the present invention.
Fig. 5 is a flowchart of another method for implementing Step 201 according to Example 1 of the present invention.
Fig. 6 is another schematic view of a network structure for implementing Step 201 according to Example 1 of the present invention.
Fig. 7 is a flowchart of a model training method according to Example 1 of the present invention.
Fig. 8 is a flowchart of a method for implementing Step 202 according to Example 1 of the present invention.
Fig. 9 is a flowchart of a method for implementing Step 109 according to Example 1 of the present invention.
Fig. 10 is a flowchart of a worker distribution method according to Example 2 of the present invention.
Fig. 11 is a schematic view of a worker determination device according to Example 3 of the present invention.
Fig. 12 is a schematic view of a worker distribution system according to Example 3 of the present invention.

## DESCRIPTION OF EMBODIMENTS

Hereinafter, preferred embodiments of the present invention will be described with reference to the drawings.

Example 1

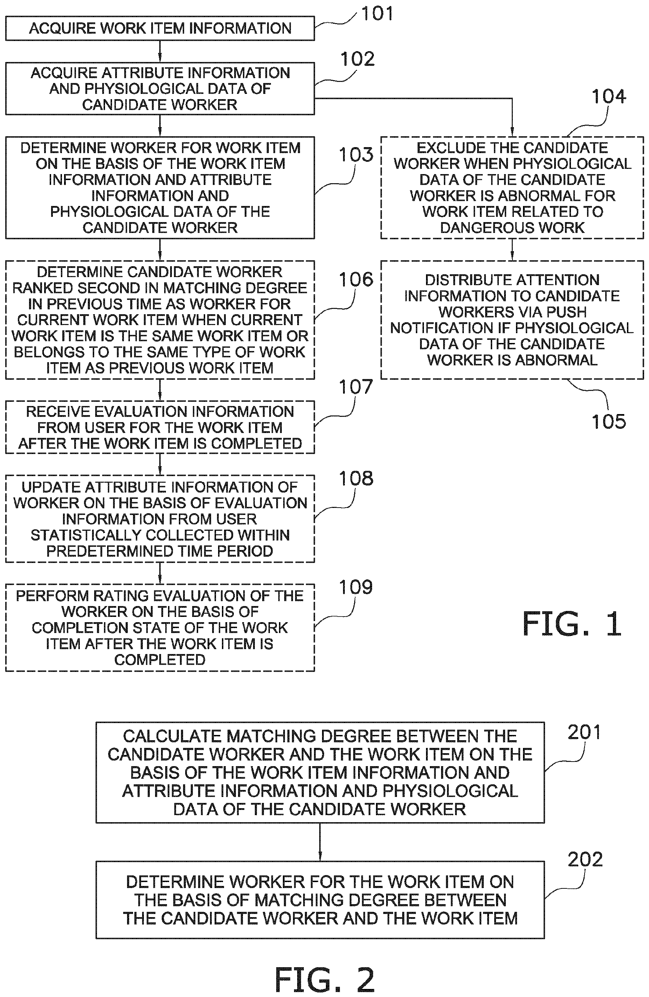

Example 1 of the present invention provides a worker determination method. Fig. 1 is a flowchart of a worker determination method according to Example 1 of the present invention. As illustrated in Fig. 1, the method includes:

Step 101 for acquiring work item information;
Step 102 for acquiring the attribute information and the physiological data of candidate workers; and
Step 103 for determining a worker for the work item on the basis of the work item information and the attribute information and the physiological data of the candidate workers.

In this way, since a worker for the work item is determined by comprehensively considering the elements including the work item information, and the attribute information and the physiological data of candidate workers, it has been possible to determine a worker who has a high degree of matching with the work item and whose current situation is suited to execute the work item, thereby balancing the work effect and the health condition of the worker. This has improved the work quality and user satisfaction, and has secured the safety of the worker.

In some examples, a worker is an after-sales service worker and is, for example, a worker who performs work such as maintenance, repair, and replacement of a device. However, the method according to the examples of the present invention is also applicable to other workers, such as an installation worker of a device, an engineering measurer, and a designer.

The device may include various types of devices applied in various fields and is, for example, a household device, a business device, an industrial device, or the like. For example, the device includes devices such as a household or business air-conditioning device, a fresh air device, a thermal insulation device, various household electrical appliances, and a large machine. Examples of the present invention do not limit the type of device as a work object.

At Step 101, work item information is acquired. For example, a work order is received, and on the basis of a work item in the work order, work item information of the work item is acquired from a database. Here, the work order is, for example, information of an order generated on the basis of an operation of a user. For example, when a user submits an order through a terminal device, the information of the order is generated. In this way, the work item information can be generated in a timely manner on the basis of the work order, which enables a quick response.

In some examples, the work item information includes at least one of an identifier (an ID, for example) of a work item, a belonging area, a location city, a model number of a device as a work object, a reference working time, a use time of the device, and a component subjected to repair and maintenance this time, which is a name of the work object.

At Step 102, attribute information and physiological data of candidate workers are acquired.

For example, the attribute information of all candidate workers is acquired from the database, and the physiological data of the candidate workers is generated on the basis of detection results of terminal devices used by the candidate workers.

In some examples, the worker candidates are, for example, all workers stored in a database or all workers belonging to a local service organization, and the local service organization is, for example, an office or the like.

In some examples, the attribute information includes at least one of a worker identifier, an age, the number of years of service, a level, work history information, a belonging organization, and a location city.

In some examples, the level of a worker is related to, for example, a rating evaluation result of the worker, and the work history information of a worker includes, for example, the number of times of work and an average completion time of the worker for each item.

In some examples, the physiological data is time-series data of a current physiological parameter within a certain period of time, and the physiological data includes at least one of a respiration rate, a blood pressure, a blood sugar, a blood lipid, a heart rate, an alcohol concentration, a blood oxygen concentration, a body temperature, and voice. For example, the certain period of time is the most recent one day, the most recent half day, or the most recent one hour.

For example, if a worker is sick or exhausted, one or more of these physiological parameters may be abnormal over a period of time, and if the worker's feeling is unstable, one or more of these physiological parameters may change significantly within a period of time.

Therefore, it is possible to know the current physical and mental conditions of the worker by statistically collecting the physiological data for a certain period of time. This provides a basis for distributing suitable workers.

Further, for example, when high alcohol concentration is detected from a worker or when another method specifies that the worker has consumed alcohol, the reliability of dispatching the worker is lowered.

In some examples, such physiological data is acquired from the detection results of terminal devices used by candidate workers. For example, the terminal device may include at least one of a mobile phone and various wearable devices used by a worker. For example, parameters such as a respiration rate, a heart rate, and a blood oxygen concentration of a worker are acquired by a smart band or a smart watch worn by the worker.

In some examples, the collected physiological data may be not only used to determine a worker, but also used while the worker is working. For example, in order to secure the safety of a worker, when the physiological data becomes abnormal while the worker is working, the worker is alerted to temporarily stop the work.

In some examples, as illustrated in Fig. 1, the method further includes:

Step 104 for excluding candidate workers when the physiological data of the candidate workers is abnormal for a work item related to dangerous work; and/or

Step 105 for distributing attention information to candidate workers via push notification if the physiological data of the candidate workers is abnormal.

In this way, when the physiological parameter of a candidate worker is abnormal, it is possible to timely exclude the participation of the candidate worker in dangerous work and further secure the safety of the worker. In addition, when the physiological data of a candidate worker is abnormal, attention information is distributed to the candidate worker via push notification so as to inform the worker of his/her situation in real time for timely measures such as rest and adjustment, which further secure the safety of the worker and improve the work quality.

Further, in order to ensure the working motivation of the worker, after the physiological data of the candidate worker is recovered to be normal, such a candidate worker may be a candidate worker again in distribution operation.

In some examples, the dangerous work refers to various types of work in which unsafe elements or risks are present during work. The examples include work at a high place, elevator maintenance work, fire piping maintenance, power maintenance work, and the like. Here, the work at a high place includes various types of work at a high place such as maintenance work of a roof device or a device attached to an outer wall, window wiping, and sticking of a window glass film, for example.

At Step 104, for the work item related to the dangerous work, when at least one physiological parameter in the physiological data of the candidate worker is larger than a predetermined threshold or exceeds a predetermined range, for example, such a candidate worker is excluded.

Step 104 and Step 105 are optional steps, and further, the order of execution of Step 104 and Step 105 is not limited.

At Step 103, a worker for the work item is determined on the basis of the work item information and the attribute information and the physiological data of the candidate workers.

Fig. 2 is a flowchart of a method for implementing Step 103 according to Example 1 of the present invention. As illustrated in Fig. 2, the method includes:

Step 201 for calculating a matching degree between the candidate worker and the work item on the basis of the work item information and the attribute information and the physiological data of the candidate worker; and

Step 202 for determining a worker for the work item on the basis of the matching degree between the candidate worker and the work item.

In this way, the worker is determined on the basis of the calculated matching degree, which ensures that the determined worker is a worker currently suited to execute the work item.

In some examples, at Step 201, a matching degree between each candidate worker and the work item is individually calculated. Here, it is possible to calculate the matching degree on the basis of a calculation method based on a model, a calculation method based on an numerical expression, or various methods that are other algorithms. The examples of the present invention do not limit a specific calculation method.

The following will specifically describe a calculation method based on a model as an example.

For example, at Step 201, a matching degree between the candidate worker and the work item is acquired by using at least one model on the basis of the work item information and the attribute information and the physiological data of the candidate worker.

For example, the at least one model includes a neural network based on mapping and full connection.

In some examples, the work item information, and the attribute information and the physiological data of the candidate worker may be input into respective different models, and the output results of the models may be input into another model to acquire a final matching degree, or the work item information, and the attribute information and the physiological data of the candidate worker may be input together into one model to directly acquire a matching degree. Each will be described in the following.

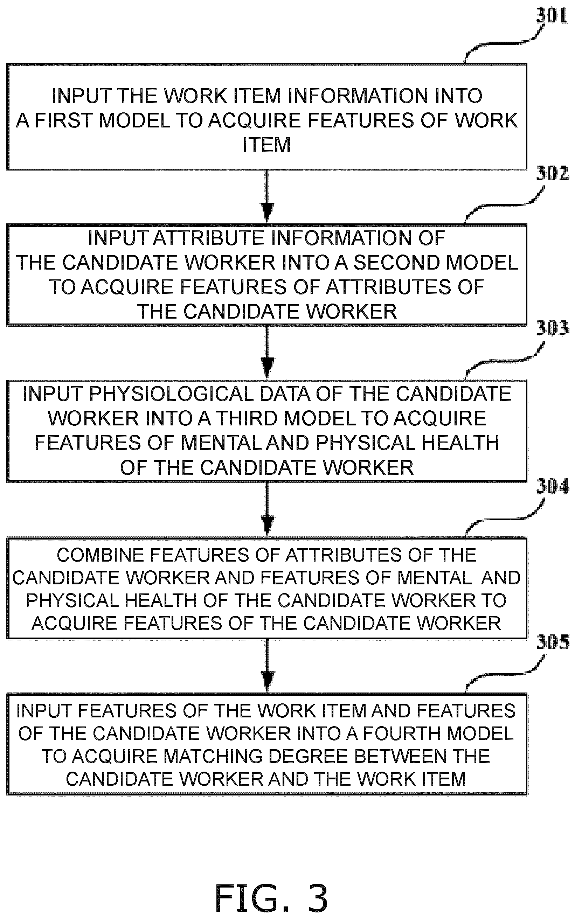

Fig. 3 is a flowchart of a method for implementing Step 201 according to Example 1 of the present invention. As illustrated in Fig. 3, the method includes:

Step 301 for inputting the work item information into a first model to acquire features of a work item;

Step 302 for inputting the attribute information of the candidate worker into a second model to acquire features of the attributes of the candidate worker;

Step 303 for inputting the physiological data of the candidate worker into a third model to acquire features of the mental and physical health of the candidate worker;

Step 304 for combining the features of the attributes of the candidate worker and the features of the mental and physical health of the candidate worker to acquire features of the candidate worker; and

Step 305 for inputting the features of the work item and the features of the candidate worker into a fourth model to acquire a matching degree between the candidate worker and the work item.

In some examples, the first model and the second model include a neural network based on mapping and full connection, and the third model includes a long short-term memory (LSTM) neural network. In addition, the third model may further include a neural network based on mapping and full connection. The LSTM neural network allows reflection of the time-related features of the physiological data of the worker, and thus it is possible to characterize the state of the mental and physical health of the user more accurately.

In addition, when the features of the mental and physical health are acquired, it is possible to characterize the state of the mental and physical health of the user and provide a basis for determining the worker.

Further, in some examples, the second model and the third model may be integrated into one model.

In some examples, the work item information includes, for example, a plurality of kinds of item information such as an item ID, a belonging area, and a location city, and the attribute information of the candidate worker includes a plurality of kinds of attribute information of the candidate worker. In the first model, the plurality of kinds of item information is processed to acquire respective features of a plurality of kinds of items corresponding to the plurality of kinds of item information, and in the second model, the plurality of kinds of attribute information of the candidate worker is processed to acquire respective features of a plurality of kinds of attributes corresponding to the plurality of kinds of attribute information.

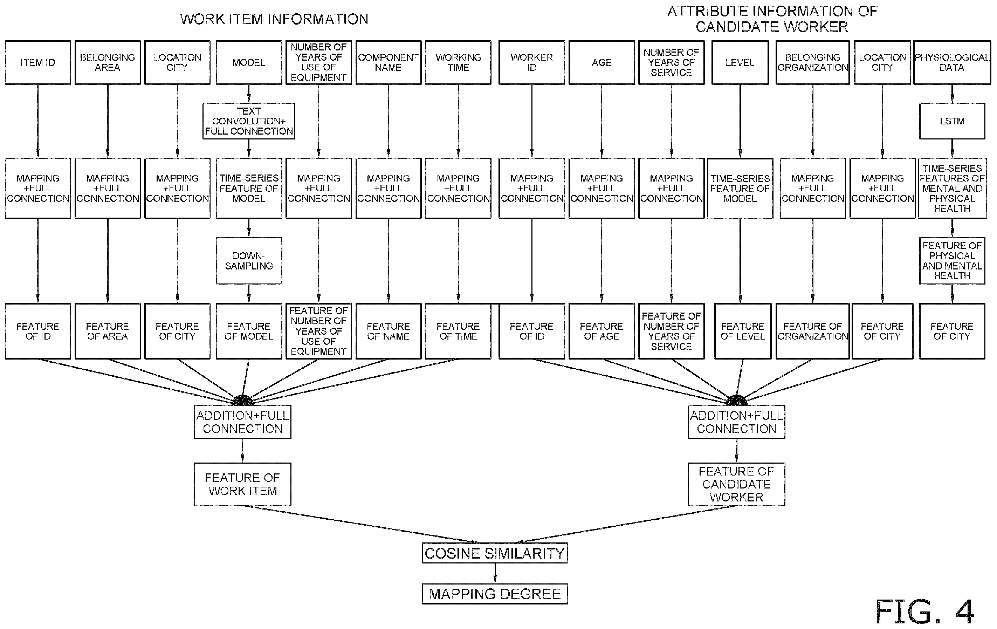

Fig. 4 is a schematic view of a network structure for implementing Step 201 according to Example 1 of the present invention. As illustrated in Fig. 4, each piece of information in the work item information is input into the mapping and a fully connected layer of the first model to acquire the features of the corresponding items, and these features of the items are, for example, 256 dimensional features. Here, the model information is input into the text convolution and a fully-connected layer of the first model to acquire the time-series features of the model, and then down-sampling is performed to acquire a feature of the model. Then, the features of each item is input into the addition and a fully connected layer to acquire features of the work item. Further, each piece of information in the attribute information of the candidate worker is input into the mapping and a fully connected layer of the second model to acquire the attribute features of the corresponding candidate worker, and these features of the item are, for example, 256 dimensional features. Further, the physiological data of the candidate worker is input into the LSTM layer of the third model to acquire the time-series features of the mental and physical health, and the time-series features of the mental and physical feature are input into the mapping and the fully connected layer to acquire the feature of the mental and physical health. Thereafter, the feature of the mental and physical health and the feature of each attribute of the candidate worker are input into the addition and a fully connected layer to acquire a feature of the candidate worker. Finally, the feature of the work item and the feature of the candidate worker are input into a fourth model to calculate a matching degree between the candidate worker and the work item on the basis of the cosine similarity. Here, the second model and the third model may be integrated into one model.

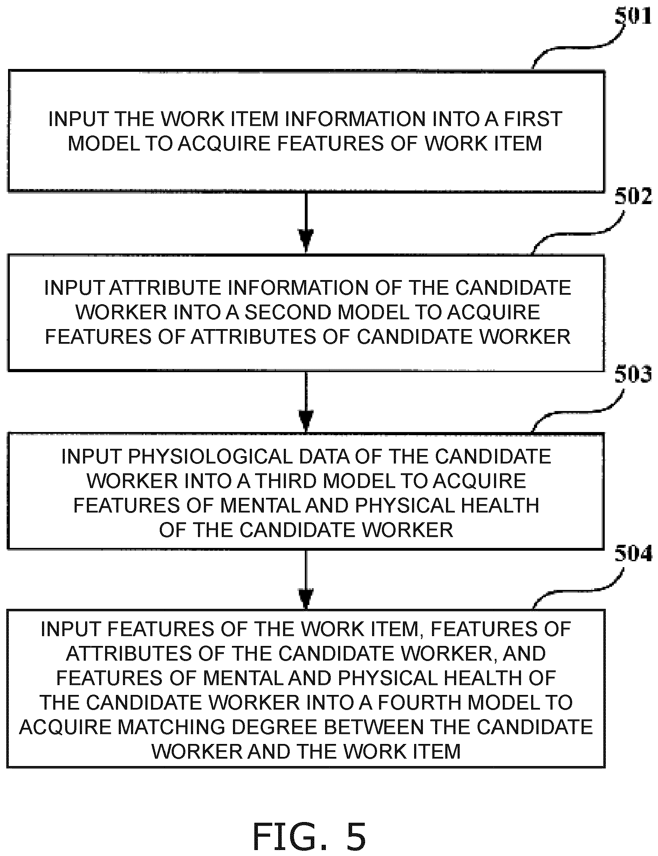

Fig. 5 is a flowchart of another method for implementing Step 201 according to Example 1 of the present invention. As illustrated in Fig. 5, the method includes:

Step 501 for inputting the work item information into a first model to acquire features of a work item;
Step 502 for inputting the attribute information of the candidate worker into a second model to acquire features of the attributes of the candidate worker;
Step 503 for inputting the physiological data of the candidate worker into a third model to acquire features of the mental and physical health of the candidate worker; and
Step 504 for inputting the features of the work item, the features of the attributes of the candidate worker, and the features of the mental and physical health of the candidate worker into a fourth model to acquire a matching degree between the candidate worker and the work item.

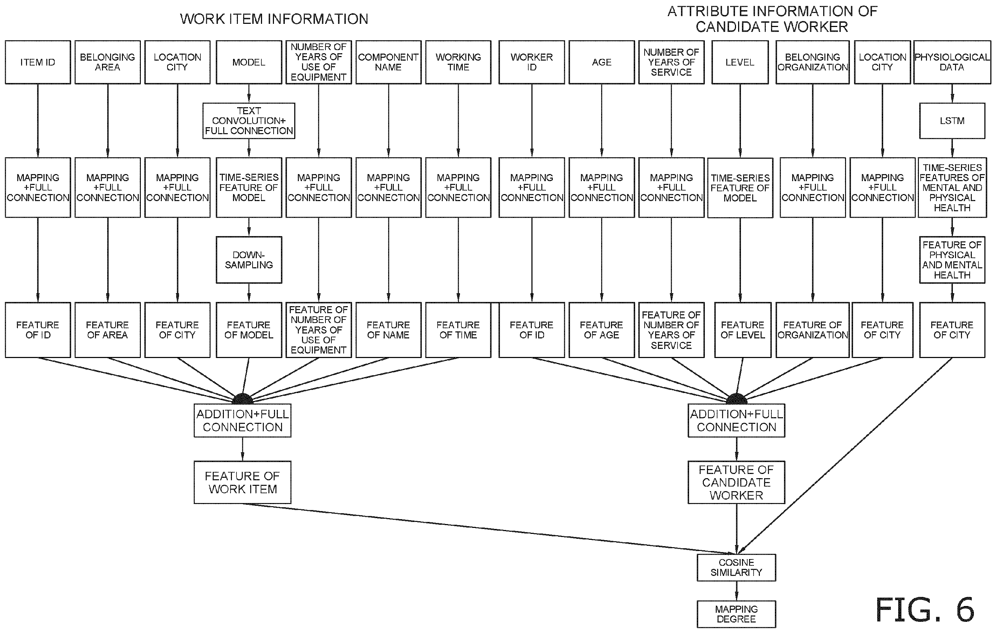

Fig. 6 is another schematic view of a network structure for implementing Step 201 according to Example 1 of the present invention. As illustrated in Fig. 6, a difference from Fig. 4 lies in that the feature of the mental and physical health and the feature of each attribute of the candidate worker are not added and fully connected but the feature of the attribute of the candidate worker is acquired on the basis of the feature of each attribute of the candidate worker, and the feature of the attribute of the candidate worker, the feature of the mental and physical health, and the feature of the work item are all input into the fourth model so as to calculate a matching degree between the candidate worker and the work item on the basis of the cosine similarity.

Fig. 4 and Fig. 6 are examples of the structure of the model used in the examples of the present invention, and the examples of the present invention are not limited to the structures illustrated in Fig. 4 and Fig. 6, and other network structures capable of obtaining similar functions may alternatively be used.

In some examples, the work item information and the attribute information and the physiological data of the candidate worker may be input into a fifth model to acquire a matching degree between the candidate worker and the work item. That is, it is possible to directly acquire a matching degree by training a model. For a specific structure of the fifth model, the examples of Fig. 4 and Fig. 6 may be referred to, for example.

The following will specifically describe the training process of at least one model used at Step 201. Further, if a plurality of models is used, the plurality of models may be trained together.

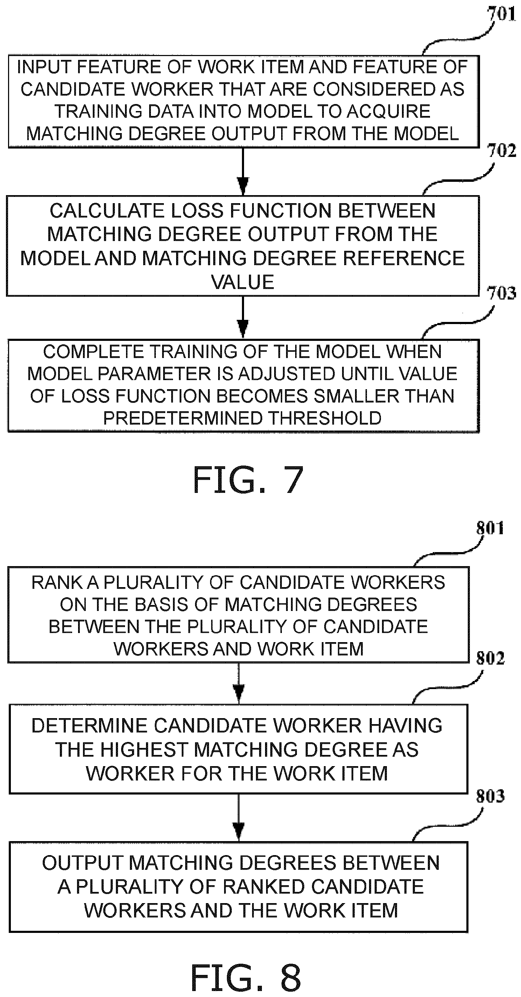

Fig. 7 is a flowchart of a model training method according to Example 1 of the present invention. As illustrated in Fig. 7, the method includes:

Step 701 for inputting the feature of the work item and the feature of the candidate worker which are considered as training data into a model to acquire a matching degree output from the model;

Step 702 for calculating a loss function between the matching degree output from the model and a matching degree reference value; and

Step 703 for completing the training of the model when a model parameter is adjusted until a value of the loss function becomes smaller than a predetermined threshold.

Specifically, in the training process, a large amount of data of work item information, and a large amount of data of attribute information and physiological data of workers are input into a model, and with the model with a mapping-fully connected neural network, it is possible to output the feature of the work item and the feature of the worker. An output value obtained by calculating the cosine similarity between the two is a matching degree. Here, the cosine similarity indicates the relation between these two kinds of features.

In some examples, the matching degree reference value is calculated on the basis of the number of times of work on a work object of a work item in each year, a work difficulty level of the work object, and a year ratio coefficient, and the closer a certain year is to the current year, the larger a year ratio coefficient is, and the farther a certain year is from the current year, the smaller a year ratio coefficient is, for example.

In some examples, the work object is, for example, a component subjected to maintenance and repair.

For example, a matching degree reference value may be calculated on the basis of the following numerical expression (1).

[Math. 1]

$$\mathrm{Rm} = \sum_{i=1}^{n} \left\{ \sum_{j=1}^{y} [(Component_{ij} \times Difficulty\ level\ point_i) \times \xi_j] \right\} \quad (1)$$

Here, Rm represents a matching degree reference value, $component_{ij}$ represents the number of times of work of an i-th component in the year j, that is, the number of times of maintenance, $difficulty\ level\ point_i$ represents a work difficulty level of the i-th component, that is, the difficulty level point, $\xi_j$ represents a year ratio coefficient, n represents the number of all components as work objects, and y represents the number of recorded years.

The following will exemplarily describe parameters in the above-described numerical expression.

[Table 1]

| Component difficulty level score | |
|---|---|
| Component name | Difficulty level point |
| Component 1 | 1.0 |
| Component 2 | 0.7 |
| Component 3 | 0.1 |
| ...... | ...... |
| Component n | 0.4 |

As shown in Table 1, different components have corresponding difficulty level points, and the higher the point is, the higher the difficulty is, for example.

[Table 2]

| Number of components maintained by worker in years | | | |
|---|---|---|---|
| Component name | Year | Number of times of work | Average completion time |
| Component 1 | 2021 | 15 | 1 hour |
| Component 1 | 2020 | 8 | 1.1 hour |
| Component 1 | 2019 | 1 | 1.2 hours |
| Component 2 | 2021 | 55 | 1.2 hours |
| Component 2 | 2020 | 80 | 1.2 hours |

(continued)

| Number of components maintained by worker in years | | | |
|---|---|---|---|
| Component name | Year | Number of times of work | Average completion time |
| Component 2 | 2019 | 102 | 1.2 hours |

As shown in Table 2, for the same worker, the number of times of maintenance work of different components in different years may be recorded, and further, an average completion time, for example, an average time for completing maintenance may be recorded.

[Table 3]

| Year ratio coefficient | | |
|---|---|---|
| Year | Coefficient | Remarks |
| 2021 | 1.0 | 1 year ago |
| 2020 | 0.7 | 2 years ago |
| 2019 | 0.2 | 3 years ago |
| 2018 | 0.0 | 5 years ago |
| 2017 | 0.0 | 5 years ago |
| 2016 | 0.0 | 6 years ago |

As shown in Table 3, assuming that the current year is 2022, the larger the number of preceding years is, the lower the year ratio coefficient is, and for example, from five years ago, the year ratio coefficient decreases to 0.

Further, the normalization processing may be performed on the matching degree reference value calculated on the basis of numerical expression (1). Thereafter, a loss function may be calculated by the following numerical expression (2) on the basis of the normalized matching degree reference value and a calculation result of the cosine similarity which is a result output from the model.

[Math. 2]

$$Loss = \ min \ \left( \sum_{i=0}^{n} \ (\hat{y}_i - y_i) \right) \qquad (2)$$

Here, Loss represents a value of a loss function,

[Math. 3]

$$\hat{y}_i$$

represents a result output from the model, $y_i$ represents a matching degree reference value, i represents an i-th component, and n represents the number of all components as work objects.

In this way, the value of each weight of the model is changed so that the value of a loss function becomes smaller. When a value of the loss function is smaller than a predetermined threshold, it indicates the convergence of the model, that is, the completion of the training of the model, and the model is stored.

In some examples, the work item information and the worker information include regional information such as a belonging area and a location city. Therefore, if the calculation by the model is wrong, it is possible, with the regional information of the work item information and the worker information, to limit workers to those in an appropriate area, thus reducing a risk of affecting the recommendation result of a worker.

At Step 202, a worker for the work item is determined on the basis of a matching degree between the candidate worker and the work item. Fig. 8 is a flowchart of a method for implementing Step 202 according to Example 1 of the present invention. As illustrated in Fig. 8, the method includes:

8

Step 801 for ranking a plurality of candidate workers on the basis of the matching degrees between the candidate workers and the work item; and

Step 802 for determining a candidate worker having the highest matching degree as a worker for the work item.

In this way, the worker having the highest matching degree is determined as a worker for the work item, which enables distribution of the work item to an optimum worker.

In some examples, when a candidate worker with the highest matching degree is asked whether to accept a current work item, if the candidate worker answers "yes", the distribution of the worker is completed, and if the candidate worker answers "no", a candidate worker ranked second in matching degree is asked in accordance with the ranked order for analogy. This ensures that the distribution of the worker is completed smoothly.

In some examples, as illustrated in Fig. 8, the method further includes:

Step 803 for outputting matching degrees between a plurality of ranked candidate workers and the work item.

For example, when a plurality of ranked candidate workers and the corresponding matching degrees are presented to a user, the user is able to intuitively grasp the situation of each candidate worker and know a basis for determining a candidate worker, or select or book a candidate worker on the basis of the ranked workers and the matching degrees, thereby further improving the user experience.

In some examples, at Step 103, a worker may not be determined on the basis of the model, and for example, a worker for a work item may be determined by a lookup table method on the basis of the work item information and the attribute information and the physiological data of candidate workers.

In this way, it is possible to determine a worker easily and conveniently.

For example, the table data used in the lookup table method can be preliminarily created on the basis of statistical data, experience, and the like, and further, the table data may be updated in accordance with user's feedback, changes in attribute information of workers, and the like.

In some examples, as illustrated in Fig. 1, the method further includes:

Step 106 for determining a candidate worker ranked second in matching degree in the previous time as a worker for a current work item when the current work item is the same work item or belongs to the same type of work item as the previous work item.

In this way, when an order for the same work item or the same type of work item is received next time, a candidate worker ranked second in the previous time is determined as a current worker as it is, which has sufficiently called motivation of the worker and has allowed quick determination of a current worker without recalculation, thereby improving the response speed of work.

In some examples, as illustrated in Fig. 1, the method further includes:

Step 107 for receiving evaluation information from a user for the work item after the work item is completed; and

Step 108 for updating the attribute information of the worker on the basis of the evaluation information from the user statistically collected within a predetermined time period.

In this way, the attribute information of the worker may be dynamically updated on the basis of the feedback information from the user, thereby providing a more accurate basis for determining a worker next time and further improving the rationality of determining a worker.

In some examples, the predetermined time period may be set in accordance with an actual situation, and is one month, one quarter, half a year, or one year, for example.

In some examples, as illustrated in Fig. 1, the method further includes:

Step 109 for performing rating evaluation of the worker on the basis of the completion state of the work item after the work item is completed,

in which a rating evaluation result of the worker is determined on the basis of the completion time of the work item, a completion time history of the worker, and a completion time reference value.

In this way, the item completion state of the worker is used to perform rating evaluation of the worker, which provides objective and effective information for the evaluation of the worker.

The rating evaluation result may be indicated by various indexes, and the rating evaluation result of the worker is indicated by a key performance indicator (KPI), for example.

In some examples, the completion time of the work item may be determined on the basis of an operation such as user's confirmation, so as to ensure the objectivity of the completion time.

In some examples, the attribute information of a worker may be updated on the basis of the rating result for the worker, so as to continuously optimize the distribution of workers.

In some examples, the rating evaluation result of a worker may be further visualized, so as to intuitively grasp the rating state of the worker.

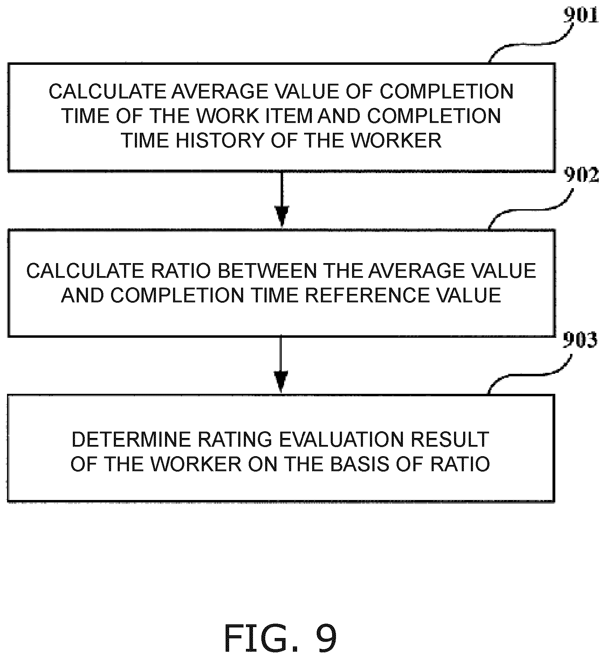

Fig. 9 is a flowchart of a method for implementing Step 109 according to Example 1 of the present invention. As illustrated in Fig. 9, the method includes:

Step 901 for calculating an average value of the completion time of the work item and a completion time history of the worker;
Step 902 for calculating a ratio between the average value and the completion time reference value; and
Step 903 for determining a rating evaluation result of the worker on the basis of the ratio.

In this way, it is possible to determine a rating evaluation result of the worker easily and conveniently.

For example, an average completion time of the worker for the work item of this year is statistically collected, and the average completion time is compared with, for example, a completion time reference value which is a reference completion time for the completed item.

For example, assuming that the completion time reference value of the work item is T1 and the average completion time of the worker for the work item of this year is T2, the rating result of the worker for the work item is determined to be excellent in the case of $T1 \times 100\% > T2$, the rating result of the worker for the work item is determined to be good in the case of $T1 \times 130\% > T2$, the rating result of the worker for the work item is determined to be passed in the case of $T1 \times 160\% > T2$, and the rating result of the worker for the work item is determined to be failed in the case of $T1 \times 190\% > T2$.

In some examples, after the average completion time of the worker is acquired, the number of times of work and the average completion time of the worker for the work item included in the attribute information of the worker may be further updated for the use for the next matching of the work item. For example, if the average completion time is shorter, the next matching degree becomes higher.

Accordingly, after a certain period of work, the attribute information of each worker is dynamically updated in accordance with the completion state of the work item. For example, if the average completion time of a plurality of workers is updated, the ranking of the matching degree may be also changed. This makes it possible to continuously optimize the distribution of workers.

Step 106 to step 109 are optional steps, and further, the order of execution of these steps is not limited.

As seen from the above-described example, since a worker for the work item is determined by comprehensively considering the elements including the work item information, and the attribute information and the physiological data of candidate workers, it has been possible to determine a worker who has a high degree of matching with the work item and whose current situation is suited to execute the work item, thereby balancing the work effect and the health condition of the worker. This has improved the work quality and user satisfaction, and has secured the safety of the worker.

Example 2

Example 2 of the present invention provides a worker distribution method corresponding to the worker determination method as described in Example 1. For the specific implementation thereof, the implementation of the method as described in Example 1 may be referred to, and the description of the same or related contents will not be repeated.

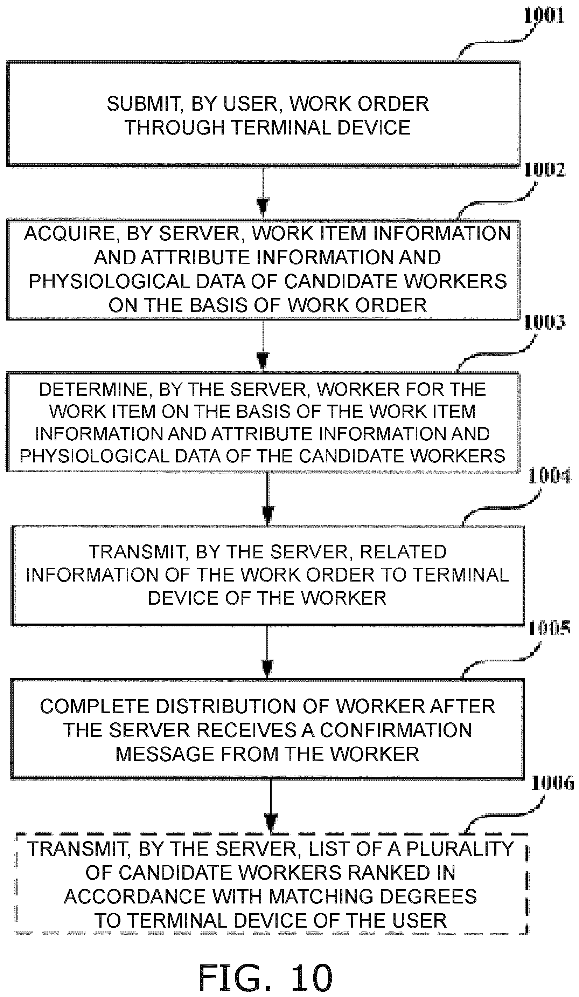

Fig. 10 is a flowchart of a worker distribution method according to Example 2 of the present invention. As illustrated in Fig. 10, the method includes:

Step 1001 for submitting, by a user, a work order through a terminal device;
Step 1002 for acquiring, by a server, the work item information and the attribute information and the physiological data of candidate workers on the basis of the work order;
Step 1003 for determining, by the server, a worker for the work item on the basis of the work item information and the attribute information and the physiological data of candidate workers;
Step 1004 for transmitting, by the server, related information of the work order to the terminal device of the worker; and
Step 1005 for completing the distribution of the worker after the server receives a confirmation message from the worker.

In some examples, as illustrated in Fig. 10, the method further includes:
Step 1006 for transmitting, by the server, a list of a plurality of candidate workers ranked in accordance with the matching degrees to the terminal device of the user.

In some examples, the terminal device of a user and the terminal device of a worker are, for example, a mobile phone, a smart watch, a smart band, or the like.

For the specific content of each of the above-described steps, the description in Example 1 may be referred to, and the description will not be repeated here.

In some examples, at Step 1004, if the worker answers that he or she is not going to perform a current work, the server transmits the related information of the work order to a terminal device of a worker ranked second in matching degree, and completes the distribution of the worker after receiving a confirmation message from the worker.

As seen from the above-described example, since a worker for the work item is determined by comprehensively considering the elements including the work item information, and the attribute information and the physiological data of candidate workers, it has been possible to determine a worker who has a high degree of matching with the work item and whose current situation is suited to execute the work item, thereby balancing the work effect and the health condition of the worker. This has improved the work quality and user satisfaction, and has secured the safety of the worker.

Example 3

Example 3 of the present invention provides a worker determination device corresponding to the worker determination method as described in Example 1. For the specific implementation thereof, the implementation of the method as described in Example 1 may be referred to, and the description of the same or related contents will not be repeated.

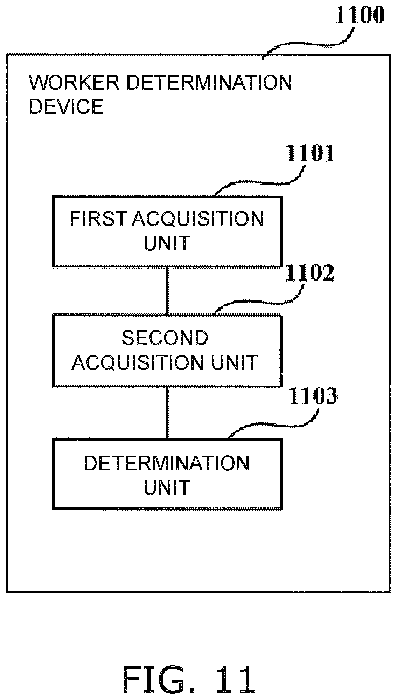

Fig. 11 is a schematic view of a worker determination device according to Example 3 of the present invention, and as illustrated in Fig. 11, a worker determination device 1100 includes: a first acquisition unit 1101 configured to acquire work item information;

a second acquisition unit 1102 configured to acquire attribute information and physiological data of candidate workers; and
a determination unit 1103 configured to determine a worker for the work item on the basis of the work item information and the attribute information and the physiological data of the candidate workers.

In some examples, for the realization of the function of each of the above-described units, the contents of the related steps in Example 1 may be referred to, and the description will not be repeated here.

In some examples, the worker determination device 1100 may be provided in a server.

As seen from the above-described example, since a worker for the work item is determined by comprehensively considering the elements including the work item information, and the attribute information and the physiological data of candidate workers, it has been possible to determine a worker who has a high degree of matching with the work item and whose current situation is suited to execute the work item, thereby balancing the work effect and the health condition of the worker. This has improved the work quality and user satisfaction, and has secured the safety of the worker.

Example 4

Example 4 of the present invention provides a worker distribution system including the worker distribution method as described in Example 2. For the specific implementation thereof, the implementation of the methods as described in Example 1 and Example 2 may be referred to, and the description of the same or related contents will not be repeated.

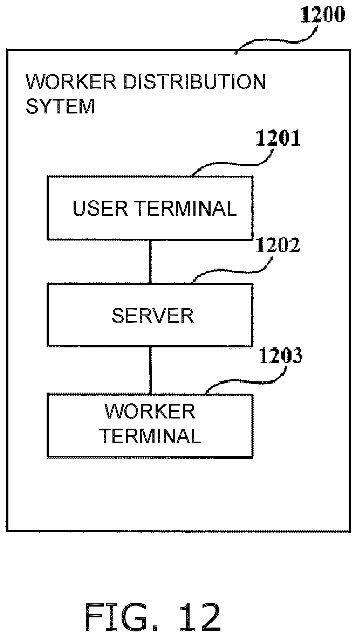

Fig. 12 is a schematic view of a worker distribution system according to Example 3 of the present invention, and as illustrated in Fig. 12, a worker distribution system 1200 includes:

a user terminal 1201 with which a user submits a work order;
a server 1202 configured to acquire the work item information and the attribute information and the physiological data of candidate workers on the basis of the work order, and determine a worker for the work item on the basis of the work item information and the attribute information and the physiological data of the candidate worker; and
a worker terminal 1203 with which a confirmation message is transmitted to the server 1202 after receiving related information of the work order from the server 1202.

In some examples, the worker terminal is, for example, a mobile phone, a smart watch, a smart band, or the like, and may be carried or worn by each worker.

As seen from the above-described example, since a worker for the work item is determined by comprehensively considering the elements including the work item information, and the attribute information and the physiological data of candidate workers, it has been possible to determine a worker who has a high degree of matching with the work item and whose current situation is suited to execute the work item, thereby balancing the work effect and the health condition of the worker. This has improved the work quality and user satisfaction, and has secured the safety of the worker.

The above-described device and method according to the examples of the present invention may be achieved by hardware, or may be achieved by the combination of hardware and software. The present invention relates to a computer-readable program that causes, when executed by a logic component, the logic component to achieve the above-described device or component or causes the logic component to achieve the above-described various methods or steps.

The example of the present invention further relates to a storage medium for storing the above-described program, such as a hard disk, a magnetic disk, an optical disk, a digital versatile disk (DVD), or a flash memory, for example.

It should be noted that, on the premise that the limitation of each step according to the present solutions does not affect the implementation of the specific solutions, such limitation is not recognized as limiting the order of the steps, and that a previous step may be executed earlier or executed later or may be executed simultaneously with a later step, all of which should be considered to fall within the protection scope of the present invention as long as the implementation of the present solutions is possible.

While the present invention has been described above with reference to the specific embodiments, it is clear for persons skilled in the art that the foregoing description is illustrative and not restrictive of the claims of the present invention. Persons skilled in the art may make variations and modifications with respect to the present invention on the basis of the spirit and principle of the present invention, and these variations and modifications also fall within the scope of the present invention.

**Claims**

1. A method for determining a worker, the method comprising:

   acquiring work item information;
   acquiring attribute information and physiological data of a candidate worker; and
   determining a worker for the work item on the basis of the work item information and the attribute information and the physiological data of the candidate worker.

2. The method according to claim 1, wherein

   determining a worker for the work item on the basis of the work item information and the attribute information and the physiological data of the candidate worker includes
   calculating a matching degree between the candidate worker and the work item on the basis of the work item information and the attribute information and the physiological data of the candidate worker, and
   determining a worker for the work item on the basis of the matching degree between the candidate worker and the work item.

3. The method according to claim 2, wherein

   calculating a matching degree between the candidate worker and the work item on the basis of the work item information and the attribute information and the physiological data of the candidate worker includes
   acquiring, by using at least one model, a matching degree between the candidate worker and the work item on the basis of the work item information and the attribute information and the physiological data of the candidate worker.

4. The method according to claim 3, wherein

   acquiring, by using at least one model, a matching degree between the candidate worker and the work item on the basis of the work item information and the attribute information and the physiological data of the candidate worker includes
   inputting the work item information into a first model to acquire a feature of a work item,
   inputting the attribute information of the candidate worker into a second model to acquire a feature of an attribute of the candidate worker,
   inputting the physiological data of the candidate worker into a third model to acquire a feature of mental and physical health of the candidate worker,
   combining the feature of the attribute of the candidate worker and the feature of the mental and physical health of the candidate worker to acquire a feature of the candidate worker, and
   inputting the feature of the work item and the feature of the candidate worker into a fourth model to acquire a matching degree between the candidate worker and the work item.

5. The method according to claim 3, wherein

   acquiring, by using at least one model, a matching degree between the candidate worker and the work item on the basis of the work item information and the attribute information and the physiological data of the candidate worker includes

inputting the work item information into a first model to acquire a feature of a work item,

inputting the attribute information of the candidate worker into a second model to acquire a feature of an attribute of the candidate worker,

inputting the physiological data of the candidate worker into a third model to acquire a feature of mental and physical health of the candidate worker, and

inputting the feature of the work item, the feature of the attribute of the candidate worker, and the feature of the mental and physical health of the candidate worker into a fourth model to acquire a matching degree between the candidate worker and the work item.

6. The method according to claim 3, wherein

acquiring, by using at least one model, a matching degree between the candidate worker and the work item on the basis of the work item information and the attribute information and the physiological data of the candidate worker includes

inputting the work item information and the attribute information and the physiological data of the candidate worker into a fifth model to acquire a matching degree between the candidate worker and the work item.

7. The method according to claim 4, wherein

the work item information includes a plurality of kinds of item information, and the attribute information of the candidate worker includes a plurality of kinds of attribute information of the candidate worker,

in the first model, the plurality of kinds of item information are processed to acquire respective features of a plurality of kinds of items corresponding to the plurality of kinds of item information, and

in the second model, the plurality of kinds of attribute information of the candidate worker are processed to acquire respective features of a plurality of kinds of attributes corresponding to the plurality of kinds of attribute information.

8. The method according to claim 2, wherein

determining a worker for the work item on the basis of the matching degree between the candidate worker and the work item includes

ranking a plurality of candidate workers on the basis of matching degrees between the plurality of candidate workers and the work item, and

determining a candidate worker having a highest matching degree as a worker for the work item.

9. The method according to claim 8, wherein

determining a worker for the work item on the basis of the matching degree between the candidate worker and the work item further includes

outputting matching degrees between the plurality of candidate workers ranked and the work item.

10. The method according to claim 3, further comprising

training the model, wherein
the training the model includes
inputting a feature of a work item and a feature of a candidate worker which are considered as training data into a model to acquire a matching degree output from the model,

calculating a loss function between the matching degree output from the model and a matching degree reference value, and

completing training of the model when a model parameter is adjusted until a value of the loss function becomes smaller than a predetermined threshold.

11. The method according to claim 10, wherein

the matching degree reference value is calculated on the basis of a number of times of work on a work object of a work item in each year, a work difficulty level of the work object, and a year ratio coefficient,

the closer a certain year is to a current year, the larger the year ratio coefficient is, and
the farther a certain year is from a current year, the smaller the year ratio coefficient is.

12. The method according to claim 1, wherein

determining a worker for the work item on the basis of the work item information and the attribute information and the physiological data of the candidate worker includes
determining a worker for the work item by a lookup table method on the basis of the work item information and the attribute information and the physiological data of the candidate worker.

13. The method according to claim 1, wherein

acquiring work item information includes
receiving a work order, and
acquiring work item information of a work item from a database on the basis of the work item in the work order.

14. The method according to any one of claims 1 to 13, wherein the work item information includes at least one of an identifier of the work item, a belonging area, a location city, a model number of a work object, a reference working time, a use time of the work object, and a name of the work object.

15. The method according to claim 1, wherein

the acquiring attribute information and physiological data of a candidate worker includes
acquiring attribute information of all candidate workers from a database, and
generating physiological data of the candidate workers on the basis of detection results of terminal devices used by the candidate workers.

16. The method according to any one of claims 1 to 13 and 15, wherein

the physiological data is time-series data of a current physiological parameter within a certain period of time,
the physiological data includes at least one of a respiration rate, a blood pressure, a blood sugar, a blood lipid, a heart rate, an alcohol concentration, a blood oxygen concentration, a body temperature, and voice, and
the attribute information includes at least one of a worker identifier, an age, a number of years of service, a level, work history information, a belonging organization, and a location city.

17. The method according to claim 1, further comprising:

excluding a candidate worker when physiological data of the candidate worker is abnormal, for a work item related to dangerous work; and/or
distributing attention information to a candidate worker via push notification when the physiological data of the candidate worker is abnormal.

18. The method according to claim 2, further comprising
determining a candidate worker ranked second in a matching degree in a previous time as a worker for a current work item when the current work item is the same work item or belongs to the same type of work item as a previous work item.

19. The method according to claim 1, further comprising:

receiving evaluation information from a user for the work item after the work item is completed; and
updating attribute information of the worker on the basis of the evaluation information from the user statistically collected within a predetermined time period.

20. The method according to claim 1, further comprising

performing rating evaluation of the worker on the basis of a completion state of the work item after the work item is completed, wherein
a rating evaluation result of the worker is determined on the basis of a completion time of the work item, a completion time history of the worker, and a completion time reference value.

21. The method according to claim 20, wherein

determining a rating evaluation result of the worker on the basis of a completion time of the work item, a completion time history of the worker, and a completion time reference value includes
calculating an average value of a completion time of the work item and a completion time history of the worker, calculating a ratio between the average value and a completion time reference value, and
determining a rating evaluation result of the worker on the basis of the ratio.

22. A method for distributing a worker, the method comprising:

submitting, by a user, a work order through a terminal device;
acquiring, by a server, work item information and attribute information and physiological data of a candidate worker on the basis of the work order;
determining, by the server, a worker for a work item on the basis of the work item information and the attribute information and the physiological data of the candidate worker;
transmitting, by the server, related information of the work order to a terminal device of the worker; and
completing distribution of the worker after the server receives a confirmation message from the worker.

23. The method according to claim 22, further comprising
transmitting, by the server, a list of a plurality of candidate workers ranked in accordance with matching degrees to the terminal device of the user.

24. A worker determination device, comprising:

a first acquisition unit configured to acquire work item information;
a second acquisition unit configured to acquire attribute information and physiological data of a candidate worker;
a determination unit configured to determine a worker for the work item on the basis of the work item information and the attribute information and the physiological data of the candidate worker.

25. A worker distribution system, comprising:

a user terminal with which a user submits a work order;
a server configured to acquire work item information and attribute information and physiological data of a candidate worker on the basis of the work order, and determine a worker for a work item on the basis of the work item information and the attribute information and the physiological data of the candidate worker; and
a worker terminal with which a confirmation message is transmitted to the server after receiving related information of the work order from the server.

ACQUIRE WORK ITEM INFORMATION — 101

ACQUIRE ATTRIBUTE INFORMATION AND PHYSIOLOGICAL DATA OF CANDIDATE WORKER — 102

DETERMINE WORKER FOR WORK ITEM ON THE BASIS OF THE WORK ITEM INFORMATION AND ATTRIBUTE INFORMATION AND PHYSIOLOGICAL DATA OF THE CANDIDATE WORKER — 103

EXCLUDE THE CANDIDATE WORKER WHEN PHYSIOLOGICAL DATA OF THE CANDIDATE WORKER IS ABNORMAL FOR WORK ITEM RELATED TO DANGEROUS WORK — 104

DETERMINE CANDIDATE WORKER RANKED SECOND IN MATCHING DEGREE IN PREVIOUS TIME AS WORKER FOR CURRENT WORK ITEM WHEN CURRENT WORK ITEM IS THE SAME WORK ITEM OR BELONGS TO THE SAME TYPE OF WORK ITEM AS PREVIOUS WORK ITEM — 106

DISTRIBUTE ATTENTION INFORMATION TO CANDIDATE WORKERS VIA PUSH NOTIFICATION IF PHYSIOLOGICAL DATA OF THE CANDIDATE WORKER IS ABNORMAL — 105

RECEIVE EVALUATION INFORMATION FROM USER FOR THE WORK ITEM AFTER THE WORK ITEM IS COMPLETED — 107

UPDATE ATTRIBUTE INFORMATION OF WORKER ON THE BASIS OF EVALUATION INFORMATION FROM USER STATISTICALLY COLLECTED WITHIN PREDETERMINED TIME PERIOD — 108

PERFORM RATING EVALUATION OF THE WORKER ON THE BASIS OF COMPLETION STATE OF THE WORK ITEM AFTER THE WORK ITEM IS COMPLETED — 109

FIG. 1

CALCULATE MATCHING DEGREE BETWEEN THE CANDIDATE WORKER AND THE WORK ITEM ON THE BASIS OF THE WORK ITEM INFORMATION AND ATTRIBUTE INFORMATION AND PHYSIOLOGICAL DATA OF THE CANDIDATE WORKER — 201

DETERMINE WORKER FOR THE WORK ITEM ON THE BASIS OF MATCHING DEGREE BETWEEN THE CANDIDATE WORKER AND THE WORK ITEM — 202

FIG. 2

```
┌──────────────────────────────────────────┐  301
│      INPUT THE WORK ITEM INFORMATION INTO  │
│   A FIRST MODEL TO ACQUIRE FEATURES OF WORK│
│                   ITEM                      │
└──────────────────────────────────────────┘
                      │
                      ▼
┌──────────────────────────────────────────┐  302
│        INPUT ATTRIBUTE INFORMATION OF       │
│  THE CANDIDATE WORKER INTO A SECOND MODEL   │
│    TO ACQUIRE FEATURES OF ATTRIBUTES OF     │
│           THE CANDIDATE WORKER              │
└──────────────────────────────────────────┘
                      │
                      ▼
┌──────────────────────────────────────────┐  303
│ INPUT PHYSIOLOGICAL DATA OF THE CANDIDATE   │
│    WORKER INTO A THIRD MODEL TO ACQUIRE     │
│  FEATURES OF MENTAL AND PHYSICAL HEALTH     │
│         OF THE CANDIDATE WORKER             │
└──────────────────────────────────────────┘
                      │
                      ▼
┌──────────────────────────────────────────┐  304
│    COMBINE FEATURES OF ATTRIBUTES OF THE    │
│ CANDIDATE WORKER AND FEATURES OF MENTAL AND │
│  PHYSICAL HEALTH OF THE CANDIDATE WORKER TO │
│  ACQUIRE FEATURES OF THE CANDIDATE WORKER   │
└──────────────────────────────────────────┘
                      │
                      ▼
┌──────────────────────────────────────────┐  305
│ INPUT FEATURES OF THE WORK ITEM AND FEATURES│
│  OF THE CANDIDATE WORKER INTO A FOURTH MODEL│
│   TO ACQUIRE MATCHING DEGREE BETWEEN THE    │
│    CANDIDATE WORKER AND THE WORK ITEM       │
└──────────────────────────────────────────┘
```

# FIG. 3

FIG. 4

EP 4 629 146 A1

INPUT THE WORK ITEM INFORMATION INTO A FIRST MODEL TO ACQUIRE FEATURES OF WORK ITEM

501

INPUT ATTRIBUTE INFORMATION OF THE CANDIDATE WORKER INTO A SECOND MODEL TO ACQUIRE FEATURES OF ATTRIBUTES OF CANDIDATE WORKER

502

INPUT PHYSIOLOGICAL DATA OF THE CANDIDATE WORKER INTO A THIRD MODEL TO ACQUIRE FEATURES OF MENTAL AND PHYSICAL HEALTH OF THE CANDIDATE WORKER

503

INPUT FEATURES OF THE WORK ITEM, FEATURES OF ATTRIBUTES OF THE CANDIDATE WORKER, AND FEATURES OF MENTAL AND PHYSICAL HEALTH OF THE CANDIDATE WORKER INTO A FOURTH MODEL TO ACQUIRE MATCHING DEGREE BETWEEN THE CANDIDATE WORKER AND THE WORK ITEM

504

FIG. 5

FIG. 6

701

INPUT FEATURE OF WORK ITEM AND FEATURE OF
CANDIDATE WORKER THAT ARE CONSIDERED AS
TRAINING DATA INTO MODEL TO ACQUIRE
MATCHING DEGREE OUTPUT FROM THE MODEL

702

CALCULATE LOSS FUNCTION BETWEEN
MATCHING DEGREE OUTPUT FROM THE
MODEL AND MATCHING DEGREE REFERENCE
VALUE

703

COMPLETE TRAINING OF THE MODEL WHEN
MODEL PARAMETER IS ADJUSTED UNTIL VALUE
OF LOSS FUNCTION BECOMES SMALLER THAN
PREDETERMINED THRESHOLD

## FIG. 7

801

RANK A PLURALITY OF CANDIDATE WORKERS
ON THE BASIS OF MATCHING DEGREES
BETWEEN THE PLURALITY OF CANDIDATE
WORKERS AND WORK ITEM

802

DETERMINE CANDIDATE WORKER HAVING
THE HIGHEST MATCHING DEGREE AS
WORKER FOR THE WORK ITEM

803

OUTPUT MATCHING DEGREES BETWEEN
A PLURALITY OF RANKED CANDIDATE
WORKERS AND THE WORK ITEM

## FIG. 8

901

CALCULATE AVERAGE VALUE OF COMPLETION
TIME OF THE WORK ITEM AND COMPLETION
TIME HISTORY OF THE WORKER

902

CALCULATE RATIO BETWEEN THE AVERAGE VALUE
AND COMPLETION TIME REFERENCE VALUE

903

DETERMINE RATING EVALUATION RESULT
OF THE WORKER ON THE BASIS OF RATIO

FIG. 9

1001

SUBMIT, BY USER, WORK ORDER
THROUGH TERMINAL DEVICE

1002

ACQUIRE, BY SERVER, WORK ITEM INFORMATION
AND ATTRIBUTE INFORMATION AND
PHYSIOLOGICAL DATA OF CANDIDATE WORKERS
ON THE BASIS OF WORK ORDER

1003

DETERMINE, BY THE SERVER, WORKER FOR THE
WORK ITEM ON THE BASIS OF THE WORK ITEM
INFORMATION AND ATTRIBUTE INFORMATION AND
PHYSIOLOGICAL DATA OF THE CANDIDATE WORKERS

1004

TRANSMIT, BY THE SERVER, RELATED
INFORMATION OF THE WORK ORDER TO TERMINAL
DEVICE OF THE WORKER

1005

COMPLETE DISTRIBUTION OF WORKER AFTER
THE SERVER RECEIVES A CONFIRMATION
MESSAGE FROM THE WORKER

1006

TRANSMIT, BY THE SERVER, LIST OF A PLURALITY
OF CANDIDATE WORKERS RANKED IN
ACCORDANCE WITH MATCHING DEGREES
TO TERMINAL DEVICE OF THE USER

FIG. 10

1100

WORKER DETERMINATION
DEVICE

1101

FIRST ACQUISITION
UNIT

1102

SECOND
ACQUISITION UNIT

1103

DETERMINATION
UNIT

FIG. 11

FIG. 12

## INTERNATIONAL SEARCH REPORT

International application No.

**PCT/JP2023/042708**

### A. CLASSIFICATION OF SUBJECT MATTER

*G06Q 10/06*(2023.01)i
FI: G06Q10/06

According to International Patent Classification (IPC) or to both national classification and IPC

### B. FIELDS SEARCHED

Minimum documentation searched (classification system followed by classification symbols)

G06Q10/00 - G06Q99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2022-047433 A (JTEKT CORP) 24 March 2022 (2022-03-24) paragraphs [0011]-[0078], fig. 1-10 | 1, 13-14, 16, 19-21, 24 |
| A | | 2-12, 15, 17-18, 22-23, 25 |
| X | JP 2022-128333 A (PANASONIC IP MAN CORP) 01 September 2022 (2022-09-01) paragraphs [0047]-[0051], [0066]-[0068], [0074], [0097], [0109]-[0135], fig. 1, 4, 7-11 | 1, 12-16, 22, 24-25 |
| Y | | 17 |
| Y | JP 2003-088504 A (MATSUSHITA ELECTRIC IND CO LTD) 25 March 2003 (2003-03-25) paragraphs [0042]-[0045], fig. 2 | 17 |
| A | CN 112052396 A (PING AN LIFE INSURANCE CO CHINA LTD) 08 December 2020 (2020-12-08) page of abstract | 1-25 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 February 2024** | **13 February 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2023/042708**

| Patent document cited in search report | | | Publication date (day/month/year) | Patent family member(s) | Publication date (day/month/year) |
|---|---|---|---|---|---|
| JP | 2022-047433 | A | 24 March 2022 | (Family: none) | |
| JP | 2022-128333 | A | 01 September 2022 | (Family: none) | |
| JP | 2003-088504 | A | 25 March 2003 | (Family: none) | |
| CN | 112052396 | A | 08 December 2020 | (Family: none) | |

Form PCT/ISA/210 (patent family annex) (July 2022)